# EUROPEAN PATENT SPECIFICATION

(11) **EP 3 918 750 B1**
(45) Date of publication and mention of the grant of the patent: **04.10.2023**
(21) Application number: 19748760.6
(22) Date of filing: 18.07.2019
(51) Int. Cl.: H04L 9/00, H04L 9/40, H04L 9/32

(54) **TURING-COMPLETE SMART CONTRACTS FOR CRYPTOCURRENCIES**
TURING-VOLLSTÄNDIGE SMART CONTRACTS FÜR KRYPTOWÄHRUNGEN
DES CONTRATS INTELLIGENTS TURING-COMPLETS POUR LES MONNAIES CRYPTOGRAPHIQUES

(30) Priority: 06.03.2019 EP 19161086
(43) Date of publication of application: 08.12.2021
(73) Proprietor: NEC Corporation, Tokyo 108-8001 (JP)
(72) Inventor: WUEST, Karl, 8092 Zürich (CH); MATETIC, Sinisa, 8092 Zürich (CH); KARAME, Ghassan, 69115 Heidelberg (DE); CAPKUN, Srdjan, 8049 Zürich (CH)
(74) Representative: Ullrich & Naumann PartG mbB
(86) International application number: PCT/EP2019/069371
(87) International publication number: WO 2020/177883

(56) References cited:
- WO-A1-2018/193355
- Harry Kalodner ET AL: "Open access to the Proceedings of the 27th USENIX Security Symposium is sponsored by USENIX. Arbitrum: Scalable, private smart contracts Arbitrum: Scalable, private smart contracts", Proceedings of the 27th USENIX Security Symposium, 17 August 2018 (2018-08-17), XP055625483, Retrieved from the Internet: URL:https://www.usenix.org/system/files/co nference/usenixsecurity18/sec18-kalodner.p df [retrieved on 2019-09-24]
- RAYMOND CHENG ET AL: "Ekiden: A Platform for Confidentiality-Preserving, Trustworthy, and Performant Smart Contract Execution", ARXIV.ORG, CORNELL UNIVERSITY LIBRARY, 201 OLIN LIBRARY CORNELL UNIVERSITY ITHACA, NY 14853, 14 April 2018 (2018-04-14), XP081469958, DOI: 10.1109/EUROSP.2019.00023

## Description

The present invention relates to a method and a system for executing smart contracts in a cryptocurrency, wherein the state of the smart contract is stored on the cryptocurrency's blockchain.

Since the creation of Bitcoin in 2008 (for reference, see S. Nakamoto: "Bitcoin: A peer-to-peer electronic cash system"), development on digital currencies has lead to many innovations and sparked interest in other potential use cases for blockchain technology. While many proposed use cases may not profit from the use of blockchains (for reference, see K. Wüst and A. Gervais: "Do you need a blockchain?", in IACR Cryptology ePrint Archive 2017(2017), 375), general purpose Smart Contracts (for reference, see N. Szabo: "Formalizing and securing relationships on public networks", in First Monday 2, 9 (1997)) appear to be one of the most promising technologies enabled thanks to blockchain technology. While Bitcoin, which is still the most popular cryptocurrency, (and similar cryptocurrencies) already support simple smart contracts through its scripting language, Ethereum (for reference, see G. Wood: "Ethereum: A secure decentralized generalized transaction ledger" in Ethereum project yellow paper, 2014) was the first blockchain to support quasi-Turing-complete code execution on the blockchain, allowing almost any kind of smart contract. To enable such expressive smart contracts using Bitcoin, sidechains such as Rootstock (for reference, see S. D. Lerner, RSK White paper overview, 2015) must be used currently, i.e. expressive smart contracts cannot store state on the Bitcoin blockchain or interact with Bitcoin funds directly. Prior art document "Arbitrum: Scalable, private smart contracts", Harry Kalodner ET AL, Proceedings of the 27th USENIX Security Symposium, 17 August 2018 (2018-08-17) discloses a cryptocurrency system that supports smart contracts without the limitations of scalability and privacy of systems previous systems such as Ethereum. Arbitrum, like Ethereum, allows parties to create smart contracts by using code to specify the behavior. Prior art document WO 2018/193355 A1 discloses an apparatus for facilitating secure transactions to transfer ownership from a party to another party for e.g. the financial industry. An update is communicated to a ledger instance responsive to a state change associated with a cryptlet.

It is therefore an object of the present invention to improve and further develop a method and a system of the initially described type in such a way that expressive smart contracts are enabled directly on a blockchain that provides some minimum requirements. Furthermore, the smart contract execution should be flexible to conform to different trust requirements and should not rely on a trusted third party or some other single point of failure.

The present invention is set out in the independent claims, with some optional features set out in the claims dependent thereto.

According to the invention it has been recognized that an expressive smart contract execution model can be enabled by offloading contract execution to a set of providers, chosen by the smart contract creator. The state of the smart contract may be stored in a multisig output (spendable by a threshold number of providers) that also contains the contract's funds. Based on the program logic of the smart contract, the providers may be configured to create a new state transaction output and sign a multisig transaction that consumes the previous state. As the providers can execute smart contracts based on any valid state independent of whether it is included in the blockchain, execution only has side effects once the transaction is broadcast to the network and included in the chain. This enables fast independent and concurrent execution of multiple smart contracts without leading to false results due to race conditions, as every contract call is executed atomically and results can only be committed to the chain if no conflict with other transactions exist.

Even for cryptocurrencies, such as Ethereum, that already provide expressive smart contracts, the method and the system according to the present invention can be used to provide additional advantages. Namely, smart contracts only need to be executed by a small set of nodes instead of all nodes in the network. Further, execution is done ofF-chain and therefore independent of the restrictions on computational complexity that come with measures such as the block gas limit in Ethereum. Execution of smart contracts is not bound to block intervals and can be done completely asynchronously and in parallel for independent contracts. This can allow a much higher throughput for complex smart contracts.

According to embodiments of the invention the distributed set of service providers may be deployed either with or without support for Trusted Execution Environments (TEEs). In this context, different providers can offer the service of running the contracts related either to their business or in general. To increase trust and security, it may be provided that multiple service providers execute the smart contract thereby avoiding a single point of failure. In order to harden the security, or to provide trust if a service provider operates anonymously, service providers may be configured to execute the smart contracts inside a trusted execution environment, such as Intel SGX. However, the solution according to the present invention is agnostic to the deployment approach.

According to some embodiments, a flexible trust model is considered, in which the smart contract creator can choose the requirements for a state transition to be accepted. For instance, the smart contract creator may choose a set *E* of service providers and a threshold *t* of required signatures. A state transition is considered valid, if the transaction committing the results was signed by at least *t* members of the executing set *E*. By extension, participants in the smart contract will only take part in its execution if they agree with the chosen trust model, i.e. they agree with the assumption that fewer than *t* members of *E* are malicious. This allows flexibility depending on the requirements of the use case. For example, if high integrity assurance is required, but high availability is not crucial, a smart contract creator may choose a large Ewith /close to |*E*|. If on the other hand, *E* is chosen such that all of the members are trusted and high availability is required, one can even choose *t* = 1.

With respect to enabling execution of expressive smart contracts, according to an embodiment the cryptocurrency may be structured to provide the following properties (i)-(iv):
(i) Storage of auxiliary information: According to this property, the cryptocurrency allows storing auxiliary (i.e. non-financial) information in a transaction. An example for this is the ability to store data in Bitcoin scripts.
(ii) Multisignature authorization: According to this property, the cryptocurrency provides a mechanism that allows a set of entities to collectively authorize a transaction with a threshold number of signatures, e.g. multisig outputs in Bitcoin.
(iii) State dependent transaction validity: Transaction validity must be dependent on a state references in the transaction, i.e. the transaction should reference a previous transaction to be valid if and only if that previous transaction has been included in the chain and resulted in the currently valid state. E.g. in Bitcoin a transaction is only valid, if all inputs are outputs of a previous transaction (i.e. included in the chain) and have not been spent (i.e. represent the current state).
(iv) Atomic Transactions: According to this property, the cryptocurrency supports atomicity for transactions with multiple origins and destinations. This allows contract calls in which the caller transfers money to the contract. The money should in this case only be transferred if the contract is executed. In UTXO (Unspent Transaction Output)-based cryptocurrencies such as Bitcoin, this is achieved by using multiple UTXOs as input to a transaction and creating multiple outputs.

According to an embodiment, in order to increase security and harden the trust assumptions the smart contracts may be deployed and the execution may be performed inside Trusted Execution Environments (TEEs). In general, a TEE is a secure, integrity-protected environment, consisting of processing, memory, and storage capabilities. TEEs can be used to harden the system and to provide identities for pseudonymous service providers. The TEE may be implemented in an isolated environment with strictly defined entry and exit mechanisms, provided by a processor. The processor protects code and data loaded inside the TEE with respect to confidentiality and integrity. According to a specific embodiment, the TEE may use Intel's^{®} software guard extensions platform, i.e. the Intel^{®} Software Guard Extensions (SGX) enabled platform is used as an execution platform.

If the used TEE is fully trusted, it may be provided to use a single service provider to run a smart contract, since by using remote attestation users can verify that the correct environment for smart contract execution is running as expected in an integrity-protected environment. For availability reasons or if one assumes that some TEEs can be compromised, the same quorum based design as described above can be implemented, where t-out-of-n service providers are needed in order to accept the transaction as valid.

To incentivize participation of service providers in a system according to the present invention, various remuneration models may be implemented. For instance, in case the service providers are well established entities, they can provide a subscription model for smart contract execution, similar to existing cloud providers. In this case, they could receive regular payments through arbitrary means, e.g. from the smart contract creator, to compensate them for their responsibility of executing the smart contract. This could then even be combined with service level agreements.

Alternatively or additionally, the remuneration service providers may be performed based on built in transaction fees. In this case, the system can be deployed with fixed (i.e., per amount of computation) transaction fees, similar to the gas model of Ethereum, where each operation in the smart contract language is assigned some value based on its computational complexity. For this scenario, similar to Ethereum, the client can specify a "price per computational unit" (the equivalent to gas in Ethereum) which will convert the total computational complexity into an amount in the underlying cryptocurrency, which will get paid to the service providers in the transaction resulting from the execution.

According to still another alternative, a model with flexible remuneration of service providers may be implemented. Since smart contracts are written in an expressive language, handling fees can be implemented within the contract itself, i.e. the terms of execution are itself a part of the smart contract. Service providers can inspect these terms and execute the smart contract if the resulting fees are agreeable. The smart contract may then initiate payments to the service providers as part of the resulting transaction.

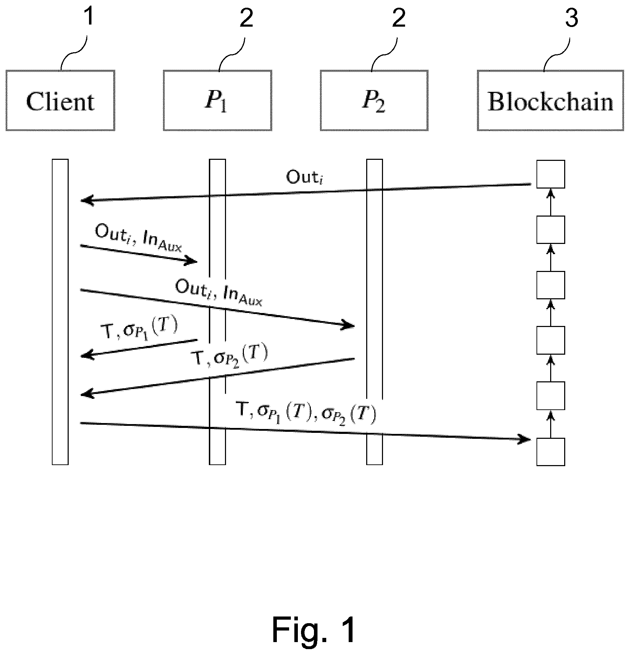

There are several ways how to design and further develop the teaching of the present invention in an advantageous way. To this end it is to be referred to the dependent claims on the one hand and to the following explanation of preferred embodiments of the invention by way of example, illustrated by the figure on the other hand. In connection with the explanation of the preferred embodiments of the invention by the aid of the figure, generally preferred embodiments and further developments of the teaching will be explained. In the drawing
- Fig. 1: is a sequence diagram representing the exchanged messages during a contract call in accordance with an embodiment of the present invention.

While Bitcoin (and similar cryptocurrencies) allow for the creation of smart contracts, they lack the expressiveness provided by smart contract platforms such as Ethereum. Projects such as Rootstock aim to enable more expressive smart contracts in Bitcoin. However, such projects require the transfer of funds from the Bitcoin main chain to a side chain, i.e. they cannot directly interact with Bitcoin funds.

Embodiments of the invention therefore aim at enabling the execution of expressive smart contracts in almost arbitrary cryptocurrencies. In this context, the minimum requirements that are required to extend a cryptocurrency system with general purpose smart contracts and provide such an extension will be explored and described in detail hereinafter. An example is Bitcoin and similar cryptocurrencies that are UTXO based and allow to store arbitrary data with some mechanism (such as storing data in scripts in Bitcoin) as well as providing the possibility to create multisig outputs. Using these properties in accordance with embodiments of the present invention, it is possible to enable smart contracts to directly interact with on-chain funds, e.g. to send money to other addresses, and to store state on-chain.

Embodiments of the present invention relate to a system and a method that allow executing smart contracts in any cryptocurrency that supports some minimal requirements. These minimum properties that the cryptocurrency has to provide will be described in greater detail below. According to some embodiments, the smart contracts are executed by a set of service providers, of which a quorum is needed to commit state changes to the blockchain. The service providers may be chosen by the contract creator and are known to all participants. By participating in a smart contract, a party implicitly trusts that a large enough fraction of the service providers behaves honestly.

Smart contract execution does not require running a consensus protocol between service providers. Instead, transactions changing the state of the contract should be valid if enough of the responsible service providers signed it. According to some embodiments, smart contracts should be executed as state transitions that are accepted by the blockchain validity rules if the input state was the previous on-chain state. This way, service providers can be implemented completely stateless and thus without the need to keep consistency by running a consensus protocol among each other.

In order to support a system with smart contracts that provide persistent storage, the cryptocurrency must support storing data, if it is desirable to allow service providers to remain stateless. Storing the contract state on chain ensures that all contract participants receive the latest state and are able to continue interacting with the smart contract.

Further, to allow a distributed set of service providers to perform state transitions if a quorum of them attests to the validity of the transition, the cryptocurrency must support a form of multisignatures. This ensures that changes to the smart contract state are only committed to the chain, if enough service providers signed the state transition.

As the service providers should remain stateless, the transaction validity rules of the cryptocurrency must allow the validity of a transaction to be conditioned on some previous state, e.g. a transaction can require that the latest transaction from some account or address has a specific hash. In Bitcoin and similar currencies, this is trivially supported through the UTXO model, since a transaction is only valid, if all inputs are previously unspent outputs. If one of these outputs is used to store the state of the smart contract, a transaction containing a state transition based on this will only be valid if no conflicting state transition was committed.

Finally, a smart contract should be able to receive and send funds with a smart contract call. This necessitates that atomic transactions with multiple origins and multiple destinations must be possible. In UTXO-based cryptocurrencies this can simply be done by creating a transaction that uses UTXOs from different parties as inputs and creating multiple outputs. In other cryptocurrencies, one potentially needs to create multiple transactions for which atomicity is guaranteed through other mechanisms.

Fig. 1 shows a system for executing smart contracts in a cryptocurrency in accordance with an embodiment of the invention, wherein the illustrated system comprises a set of service providers 2 called provider set P that can execute smart contracts.

On initialization, each provider 2 may create a keypair for receiving and sending transactions and publish the public key. This can be done in several ways. For instance, a provider 2 can publish it on the blockchain 3 of the cryptocurrency, he can make it accessible on some publicly available website, or he can send it to the smart contract creator 1 (denoted 'client' in Fig. 1) directly if he does not intend to make the service available to every entity. Given the set P of service providers 2, the client 1 can deploy, and later interact with smart contracts.

In the following, for simplicity and better readability, the system will be described based on a cryptocurrency using the UTXO model, unless mentioned otherwise. However, systems and methods according to the present invention are likewise applicable to the account based model, if the necessary properties as specified above are provided. For example, in the account model, the equivalent to a state output would be the storage location of the data (e.g. a transaction), and instead of including the previous state output as an input in the resulting transaction, transaction validity would be conditioned on the previous state, for instance by referring to the previous transaction with a hash (e.g. with a mechanism such as AccountTxnIDin Ripple, see https://developers.ripple.com/transaction-common-fields.html#accounttxnid).

According to embodiments of the invention, smart contracts may consist of a piece of code written in an arbitrary language and a contract state stored on the blockchain. A hash of the smart contract code as well as funds and the contract state may be stored in a so called *state output* which is spendable by a quorum of service providers. In this output, the contract state may be stored as a key-value store, which allows for easy retrieval of the state during contract execution.

In order to deploy a smart contract, the client 1 (or the smart contract creator) may choose an executing subset *E* ⊆ *P* of an arbitrary size *n* and a *t*-out-of-*n* trust model that describes which number *t* of the providers 2 out of the set E have to attest to the correctness of smart contract execution. The client 1 may then create a transaction where one of the outputs is a *t*-out-of-*n* multisig output that can be spent with signatures from *t* of the service providers 2 in E.

This output may contain a hash of the contract code as well as any initial contract state and any initial funds. This output is the initial state output of the smart contract. The client 1 may then broadcast the transaction and make the code available to any other party that should be able to interact with the smart contract. If the contract should be available to any entity, the client 1 could even publish the contract code in a separate transaction output of the contract creating transaction. Alternatively, the client 1 can publish it on some publicly available website.

The subset *E* ⊆ P and the *t*-out-of-*n* trust model can be chosen by the creator 1 of the smart contract to suit his needs. There is a trade-off between the trust assumptions, integrity, and availability. With very conservative assumptions, i.e. all but one provider 2 in P may be compromised, a client 1 could choose *E* = *P* with an *n*-out-of-*n* trust model. This would ensure that given at least one uncompromised provider 2, no false execution results could be committed. However, it would sacrifice availability, as the operation would be stopped if one or more of the providers 2 go offline (in addition to sacrificing efficiency due to large transactions if *n* is large).

On the other extreme, a client 1 could choose a 1-out-of-*n* trust model with *E* = *P,* which would allow for high availability, but only requires one malicious provider 2 to lose integrity. Ultimately, the creator 1 and the participants of the smart contract have to find the right balance for their use case.

To execute a smart contract, a client 1 has to contact at least *t* of the *n* providers 2 in *E* to execute the smart contract. If one of the contacted providers 2 does not respond, the client 1 needs to contact an additional one.

A sequence diagram for a contract call and execution in accordance with an embodiment of the invention is shown in Fig. 1. According to this embodiment the client 1 first fetches the current state output (Outᵢ) of the contract from the blockchain 3. To each of the contacted providers 2, the client 1 sends the current state output, together with the smart contract code, any parameters for the smart contract execution, and any additional outputs that contain funds that are to be sent to the smart contract (summarized as auxiliary inputs In_{Aux}).

The provider 2 then performs the following operations:
(1) The provider 2 hashes the contract code and compares it to the hash value stored in the state output. If the values match, the provider 2 continues, otherwise it aborts.
(2) The provider 2 then loads the state from the state output.
(3) Given the state, parameters, and additional inputs, the provider 2 executes the smart contract. This contract execution can change the state of the contract and can initiate transfer of funds to other addresses.
(4) If the smart contract execution causes funds to be transferred to another address, the provider 2 creates a transaction output spendable by said address with the corresponding value.
(5) The provider 2 creates a new state output (spendable again by /providers 2 from E) that contains the hash of the contract code, the smart contract funds with an updated value depending on how much was received/spent, as well as the new state information.
(6) The provider 2 finally creates a transaction with the outputs as described above using as inputs the old state output together with the inputs given by the client 1. The provider 2 then signs the transactions and sends both the transaction (T) and the signature (σ_{Pk} (T)) back to the client 1.

The client 1 receives this transaction from each provider 2. Since the contract execution is deterministic, each of the providers 2 creates the same transaction and provides a signature over it. Given signatures from *t* of the providers 2, the client 1 can broadcast the transaction and it can be included in the blockchain 3.

According to embodiments, when TEEs are used, the service providers 2 may run a component implemented in hardware or software that is configured to function as an interpreter for smart contracts within the TEE and provide an attestation statement to clients 1 to prove that the correct code is running. Inside the TEE, a service provider 2 may first create a private/public key pair (with the private key only known to the TEE). During attestation, the public key may be included in the statement, such that any client 1 can verify that the key was created correctly. Given the set of public keys, the client 1 then proceeds with the smart contract deployment as described above.

It should be noted, in case the execution of the smart contract is performed inside TTEs, that calls to the smart contract may proceed analogous to the protocol described above, with the difference that the execution of the contract, creation of the resulting transaction, and signing the transaction is executed within the TEE on the respective service provider(s) 2.

According to embodiments, the system may be configured to handle smart contract dependencies. For smart contracts calling other smart contracts, it has to be ensured that (i) the whole call (including subcalls) is executed atomically, and (ii) that execution integrity is guaranteed given the chosen trust model of each contract. This may be achieved in such a way that state changes for all contracts are committed with a transaction (or sequence of transactions executed atomically) signed by a quorum from the providers 2 of all involved smart contracts.

In order to execute a contract call with subcalls, the client 1 must send the state outputs and the code of all involved contracts to all service providers 2, together with any auxiliary inputs. The service providers 2 then perform the same steps 1-6 as described above, checking the code hashes for every involved contract and executing the full call chain. Since the resulting transaction can only be included in the blockchain 3 if it fulfills the multisignature condition of all involved contracts, this ensures that all state changes are only applied if all of the quorums are reached.

Many modifications and other embodiments of the invention set forth herein will come to mind to the one skilled in the art to which the invention pertains having the benefit of the teachings presented in the foregoing description and the associated drawings. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. A method for executing smart contracts in a cryptocurrency, wherein the state of the smart contract is stored on the cryptocurrency's blockchain (3), the method comprising:
by a smart contract creator (1),
determining a distributed set of service providers (2),
deploying a smart contract and defining a trust model that allows the distributed set of service providers (2) to perform a transaction that effects a state transition of the smart contract if a predefined or configurable quorum of the service providers (2) of the distributed set of service providers (2) attests to the validity of the transaction, and
offloading contract execution to the distributed set of service providers (2) and, in case of achieving the quorum, including the state transition effected by the transaction in the blockchain (3), **characterised in that** the service providers (2) create a new state transaction output and sign a multisig transaction that consumes a previous state.

2. The method according to claim 1, wherein the deploying the smart contract comprises, by the smart contract creator (1):
selecting a contract executing subset of service providers (2) from the distributed set of service providers (2), wherein the contract executing subset contains an arbitrary number *n* of service providers (2), and
determining a *t*-out-of-*n* trust model, wherein *t* specifies the number of service providers (2) out of the contract executing subset that must sign a transaction such that a respective contract state transition resulting from the transaction is considered to be valid.

3. The method according to claim 2, wherein the deploying the smart contract further comprises, by the smart contract creator (1):
creating a transaction and generating an initial state output of the smart contract, and
notifying the service providers (2) of the distributed set of service providers (2) of the transaction and of the smart contract code.

4. The method according to any of claims 1 to 3, wherein the service providers (2) of the set of service providers (2) are implemented stateless without running a consensus protocol among each other.

5. The method according to any of claims 1 to 4, wherein the state of the smart contract is stored in a multisignature output that also contains the smart contract's funds.

6. The method according to any of claims 1 to 5, wherein the smart contract is configured to be executed as contract state transitions that are accepted by the validity rules of the blockchain (3) if the input state was the previous on-chain state.

7. The method according to any of claims 1 to 6, wherein the smart contract execution is performed inside a Trusted Execution Environment, TEE.

8. The method according to claim 7, wherein the TEE uses the software guard extensions platform.

9. The method according to any of claims 1 to 8, wherein the service providers (2) of the set of service providers (2) provide a subscription model for smart contract execution.

10. The method according to any of claims 1 to 9, wherein the service providers (2) of the set of service providers (2) get assigned a per amount of computation credit for executed transactions.

11. The method according to any of claims 1 to 10, wherein terms of smart contract transaction execution are implemented within the smart contract.

12. The method according to any of claims 1 to 11, wherein a smart contract call with subcalls in which a smart contract calls at least one other smart contract is executed by committing state transitions for all involved smart contracts with a transaction or a sequence of transactions executed atomically signed by the quorum of the service providers (2) for all involved smart contracts.

13. A system for executing smart contracts in a cryptocurrency, wherein the state of the smart contract is stored on the cryptocurrency's blockchain (3), the system comprising a number of service providers (2), wherein each of the service providers (2) comprises one or more processors which, alone or in combination, are configured to provide for performance of the following steps:
receiving, from a smart contract creator (1), a current contract state output including the smart contract code, any parameters for the smart contract execution, and possibly any additional outputs that contain funds that are to be sent to the smart contract,
given the received current contract state, executing the smart contract and creating a new contract state output that contains a hash of the smart contract code, the smart contract funds with an updated value depending on how much was transferred by the contract execution, as well as the new contract state information,
creating a transaction with the new contract state output using as input the current state output received from the smart contract creator (1), and
signing the transaction and sending both the transaction and a signature of the transaction back to the smart contract creator (1), **characterised in that** the service providers (2) create a new state transaction output and sign a multisig transaction that consumes a previous state.

14. The system according to claim 13, wherein the one or more processors of the service providers (2) are further configured to provide for performance of the following step:
hashing the smart contract code from the current contract state output received from the smart contract creator (1) and comparing the hashed smart contract code to the hash value in the smart state output stored by the service provider (2), and
continuing with executing the smart contract only in case both values match.

15. The system according to claim 13 or 14, wherein the one or more processors of the service providers (2) are further configured to provide for performance of the following step:
in case the smart contract execution causes funds to be transferred to another address, creating a transaction output spendable by the address with the corresponding value.

## Patentansprüche

1. Verfahren zum Ausführen von Smart-Contracts in einer Kryptowährung, wobei der Zustand des Smart-Contracts auf der Blockchain (3) der Kryptowährung gespeichert wird, wobei das Verfahren Folgendes umfasst:
durch einen Smart-Contract Ersteller (1),
Bestimmen eines verteilten Satzes von Dienstanbietern (2),
Bereitstellen eines Smart-Contracts und Definieren eines Vertrauensmodells, das es dem verteilten Satz von Dienstanbietern (2) erlaubt, eine Transaktion durchzuführen, die einen Zustandsübergang des Smart-Contracts bewirkt, wenn ein vordefiniertes oder konfigurierbares Quorum der Dienstanbieter (2) des verteilten Satzes von Dienstanbietern (2) die Gültigkeit der Transaktion bestätigt, und
Auslagern der Vertragsausführung an den verteilten Satz von Dienstanbietern (2) und, im Falle des Erreichens des Quorums, Einfügen des durch die Transaktion bewirkten Zustandsübergangs in die Blockchain (3),
**dadurch gekennzeichnet, dass** die Dienstanbieter (2) eine neue Zustandstransaktionsausgabe erzeugen und eine Multisig-Transaktion signieren, die einen vorherigen Zustand verbraucht.

2. Verfahren nach Anspruch 1, wobei das Bereitstellen des Smart-Contracts Folgendes von Seiten des Smart-Contracts Erstellers (1) umfasst:
Auswählen einer vertragsausführenden Teilmenge von Dienstanbietern (2) aus dem verteilten Satz von Dienstanbietern (2), wobei die vertragsausführende Teilmenge eine beliebige Anzahl *n* von Dienstanbietern (2) umfasst, und
Bestimmen eines *t*-aus-*n*-Vertrauensmodells, wobei *t* die Anzahl von Dienstanbietern (2) aus der vertragsausführenden Teilmenge angibt, die eine Transaktion unterzeichnen müssen, so dass ein entsprechender Vertragszustandsübergang, der aus der Transaktion resultiert, als gültig angesehen wird.

3. Verfahren nach Anspruch 2, wobei das Bereitstellen des Smart-Contracts des Weiteren Folgendes von Seiten des Smart-Contracts Erstellers (1) umfasst:
Erstellen einer Transaktion und Erzeugen einer anfänglichen Zustandsausgabe des Smart-Contracts, und
Benachrichtigung der Dienstanbieter (2) des verteilten Satzes von Dienstanbietern (2) über die Transaktion und den Code des Smart-Contracts.

4. Verfahren nach einem der Ansprüche 1 bis 3, wobei die Dienstanbieter (2) des Satzes von Dienstanbietern (2) zustandslos implementiert werden, ohne ein Konsensprotokoll untereinander auszuführen.

5. Verfahren nach einem der Ansprüche 1 bis 4, wobei der Zustand des Smart Contracts in einer Multisignatur-Ausgabe gespeichert wird, die auch die Geldmittel des Smart Contracts enthält.

6. Verfahren nach einem der Ansprüche 1 bis 5, wobei der Smart Contract so konfiguriert ist, dass er als Vertragszustandsübergänge ausgeführt wird, die von den Gültigkeitsregeln der Blockchain (3) akzeptiert werden, wenn der Eingabezustand der vorherige On-Chain-Zustand war.

7. Verfahren nach einem der Ansprüche 1 bis 6, wobei die Ausführung des Smart Contracts innerhalb einer vertrauenswürdigen Ausführungsumgebung (Trusted Execution Environment, TEE) erfolgt.

8. Verfahren nach Anspruch 7, wobei die TEE die Software Guard Extensions Plattform verwendet.

9. Verfahren nach einem der Ansprüche 1 bis 8, wobei die Dienstanbieter (2) des Satzes von Dienstanbietern (2) ein Subskriptionsmodell für die Ausführung von Smart Contracts bereitstellen.

10. Verfahren nach einem der Ansprüche 1 bis 9, wobei den Dienstanbietern (2) des Satzes von Dienstanbietern (2) ein dem Rechenaufwand entsprechendes Guthaben für ausgeführte Transaktionen zugewiesen wird.

11. Verfahren nach einem der Ansprüche 1 bis 10, wobei die Bedingungen für die Ausführung von Smart-Contract-Transaktionen im Smart Contract implementiert sind.

12. Verfahren nach einem der Ansprüche 1 bis 11, wobei ein Smart-Contract-Aufruf mit Unteraufrufen, bei dem ein Smart-Contract mindestens einen anderen Smart-Contract aufruft, ausgeführt wird, indem Zustandsübergänge für alle involvierten Smart-Contracts mit einer Transaktion oder einer Folge von atomar ausgeführten Transaktionen, die durch das Quorum der Dienstanbieter (2) für alle beteiligten Smart-Contracts unterzeichnet sind, übergeben werden.

13. System zum Ausführen von Smart-Contracts in einer Kryptowährung, wobei der Zustand des Smart-Contracts auf der Blockchain (3) der Kryptowährung gespeichert wird, wobei das System eine Anzahl von Dienstanbietern (2) umfasst, wobei jeder der Dienstanbieter (2) einen oder mehrere Prozessoren umfasst, die allein oder in Kombination so konfiguriert sind, dass sie für die Durchführung der folgenden Schritte sorgen:
Empfangen einer aktuellen Vertragszustandsausgabe von einem Smart-Contract Ersteller (1), einschließlich des Codes des Smart-Contracts, jeglicher Parameter für die Ausführung des Smart-Contracts und möglicherweise jeglicher zusätzlicher Ausgaben, die Geldmittel enthalten, die an den Smart-Contract gesendet werden sollen,
in Anbetracht des empfangenen aktuellen Vertragszustands, Ausführen des Smart Contracts und Erzeugen einer neuen Vertragszustandsausgabe, die einen Hash des Codes des Smart-Contracts, die Geldmittel des Smart-Contracts mit einem aktualisierten Wert, abhängig davon, wie viel durch die Vertragsausführung übertragen wurde, sowie die neuen Vertragszustandsinformationen umfasst,
Erzeugen einer Transaktion mit der neuen Vertragszustandsausgabe unter Verwendung der von dem Smart-Contract Ersteller (1) empfangenen aktuellen Zustandsausgabe als Eingabe, und
Signieren der Transaktion und Senden sowohl der Transaktion als auch einer Signatur der Transaktion zurück an den Smart-Contract Ersteller (1),
**dadurch gekennzeichnet, dass** die Dienstanbieter (2) eine neue Zustandstransaktionsausgabe erzeugen und eine Multisig-Transaktion signieren, die einen vorherigen Zustand verbraucht.

14. System nach Anspruch 13, wobei der eine oder die mehreren Prozessoren der Dienstanbieter (2) weiterhin so konfiguriert sind, dass sie für die Durchführung des folgenden Schritts sorgen:
Hashen des Smart-Contract Codes aus der vom Smart-Contract Ersteller (1) empfangenen aktuellen Vertragszustandsausgabe und Vergleichen des gehashten Smart-Contract Codes mit dem Hash-Wert in der vom Dienstanbieter (2) gespeicherten Smart-Zustandsausgabe, und
Fortfahren mit der Ausführung des Smart-Contracts nur dann, wenn beide Werte übereinstimmen.

15. System nach Anspruch 13 oder 14, wobei der eine oder die mehreren Prozessoren der Dienstanbieter (2) weiterhin so konfiguriert sind, dass sie für die Durchführung des folgenden Schritts sorgen:
falls die Ausführung des Smart-Contracts die Überweisung von Geldmitteln an eine andere Adresse bewirkt, Erzeugen einer Transaktionsausgabe, die von der Adresse mit dem entsprechenden Wert ausgegeben werden kann.

## Revendications

1. Procédé d'exécution de contrats intelligents dans une cryptomonnaie, dans lequel l'état du contrat intelligent est stocké sur la chaîne de blocs de la cryptomonnaie (3), le procédé comprenant :
par un créateur de contrat intelligent (1),
la détermination d'un ensemble distribué de fournisseurs de services (2),
le déploiement d'un contrat intelligent et la définition d'un modèle de confiance qui permet à l'ensemble distribué de fournisseurs de services (2) de réaliser une transaction qui effectue une transition d'état du contrat intelligent si un quorum prédéfini ou configurable des fournisseurs de services (2) de l'ensemble distribué de fournisseurs de services (2) atteste de la validité de la transaction, et
le fait de se décharger de l'exécution du contrat sur l'ensemble distribué de fournisseurs de services (2) et, en cas d'atteinte du quorum, d'inclure la transition d'état effectuée par la transaction dans la chaîne de blocs (3), **caractérisé en ce que** les fournisseurs de services (2) créent une nouvelle sortie de transaction d'état et signent une transaction multisignature qui consomme un état précédent.

2. Procédé selon la revendication 1, dans lequel le déploiement du contrat intelligent comprend, par le créateur de contrat intelligent (1) :
la sélection d'un sous-ensemble de fournisseurs de services (2) exécutant le contrat à partir de l'ensemble distribué de fournisseurs de services (2), dans lequel le sous-ensemble exécutant le contrat contient un nombre arbitraire *n* de fournisseurs de services (2), et
la détermination de t modèle de confiance sur n, dans lequel t spécifie le nombre de fournisseurs de services (2) parmi le sous-ensemble exécutant le contrat qui doivent signer une transaction de sorte qu'une transition d'état de contrat respective résultant de la transaction soit considérée comme valide.

3. Procédé selon la revendication 2, dans lequel le déploiement du contrat intelligent comprend en outre, par le créateur de contrat intelligent (1) :
la création d'une transaction et la génération d'une sortie d'état initial du contrat intelligent, et
la notification aux fournisseurs de services (2) de l'ensemble distribué de fournisseurs de services (2) de la transaction et du code de contrat intelligent.

4. Procédé selon l'une quelconque des revendications 1 à 3, dans lequel les fournisseurs de services (2) de l'ensemble de fournisseurs de services (2) sont mis en oeuvre sans état sans exécuter de protocole de consensus entre eux.

5. Procédé selon l'une quelconque des revendications 1 à 4, dans lequel l'état du contrat intelligent est stocké dans une sortie multisignature qui contient également les fonds du contrat intelligent.

6. Procédé selon l'une quelconque des revendications 1 à 5, dans lequel le contrat intelligent est configuré pour être exécuté sous forme de transitions d'état de contrat qui sont acceptées par les règles de validité de la chaîne de blocs (3) si l'état d'entrée était l'état précédent dans la chaîne.

7. Procédé selon l'une quelconque des revendications 1 à 6, dans lequel l'exécution de contrat intelligent est réalisée à l'intérieur d'un environnement d'exécution sécurisé, TEE.

8. Procédé selon la revendication 7, dans lequel le TEE utilise la plateforme Software Guard Extensions.

9. Procédé selon l'une quelconque des revendications 1 à 8, dans lequel les fournisseurs de services (2) de l'ensemble de fournisseurs de services (2) fournissent un modèle d'abonnement pour l'exécution de contrats intelligents.

10. Procédé selon l'une quelconque des revendications 1 à 9, dans lequel les fournisseurs de services (2) de l'ensemble de fournisseurs de services (2) se voient attribuer un montant de crédit de calcul pour les transactions exécutées.

11. Procédé selon l'une quelconque des revendications 1 à 10, dans lequel des termes d'exécution de transaction de contrat intelligent sont mis en oeuvre dans le contrat intelligent.

12. Procédé selon l'une quelconque des revendications 1 à 11, dans lequel un appel de contrat intelligent avec des sous-appels dans lesquels un contrat intelligent appelle au moins un autre contrat intelligent est exécuté en engageant des transitions d'état pour tous les contrats intelligents impliqués avec une transaction ou une séquence de transactions exécutées de manière atomique signées par le quorum des fournisseurs de services (2) pour tous les contrats intelligents impliqués.

13. Système pour exécuter des contrats intelligents dans une cryptomonnaie, dans lequel l'état du contrat intelligent est stocké sur la chaîne de blocs (3) de la cryptomonnaie, le système comprenant un certain nombre de fournisseurs de services (2), dans lequel chacun des fournisseurs de services (2) comprend un ou plusieurs processeurs qui, seuls ou en combinaison, sont configurés pour assurer l'exécution des étapes suivantes :
recevoir, à partir d'un créateur de contrat intelligent (1), une sortie d'état de contrat actuel comportant le code de contrat intelligent, tout paramètre pour l'exécution de contrat intelligent, et éventuellement toute sortie supplémentaire contenant des fonds devant être envoyés au contrat intelligent,
compte tenu de l'état de contrat actuel reçu, exécuter le contrat intelligent et créer une nouvelle sortie d'état de contrat contenant un hachage du code de contrat intelligent, les fonds de contrat intelligent avec une valeur mise à jour en fonction du montant transféré par l'exécution de contrat, ainsi que les nouvelles informations sur l'état de contrat,
créer une transaction avec la nouvelle sortie d'état de contrat en utilisant comme entrée la sortie de l'état actuel reçue à partir du créateur de contrat intelligent (1), et
signer la transaction et renvoyer à la fois la transaction et une signature de la transaction au créateur de contrat intelligent (1), **caractérisé en ce que** les fournisseurs de services (2) créent une nouvelle sortie de transaction d'état et signent une transaction multisignature qui consomme un état antérieur.

14. Système selon la revendication 13, dans lequel les un ou plusieurs processeurs des fournisseurs de services (2) sont en outre configurés pour assurer la réalisation de l'étape suivante :
hacher le code de contrat intelligent à partir de la sortie d'état de contrat actuel reçue du créateur de contrat intelligent (1) et comparer le code de contrat intelligent haché à la valeur de hachage dans la sortie d'état de contrat intelligent stockée par le fournisseur de services (2), et
poursuivre l'exécution du contrat intelligent uniquement dans le cas où les deux valeurs se correspondent.

15. Système selon la revendication 13 ou 14, dans lequel les un ou plusieurs processeurs des fournisseurs de services (2) sont en outre configurés pour assurer la réalisation de l'étape suivante :
dans le cas où l'exécution de contrat intelligent entraîne le transfert de fonds vers une autre adresse, créer une sortie de transaction pouvant être dépensée par l'adresse avec la valeur correspondante.
